# EUROPÄISCHE PATENTSCHRIFT

(11) **EP 4 460 450 B1**
(45) Veröffentlichungstag und Bekanntmachung des Hinweises auf die Patenterteilung: **25.11.2026**
(21) Anmeldenummer: 22838763.5
(22) Anmeldetag: 14.12.2022
(51) Int. Cl.: B60W 60/00, B60W 50/023, B60W 50/02, B60W 50/08, B60W 50/12, B60K 35/00

(54) **VERFAHREN ZUM BETRIEB EINES ZUMINDEST TEILWEISE AUTOMATISIERTEN FAHRZEUGES IN EINEM MANUELLEN FAHRMODUS, COMPUTERPROGRAMMPRODUKT SOWIE SYSTEM**
METHOD FOR OPERATING AN AT LEAST PARTIALLY AUTOMATED VEHICLE IN A MANUAL DRIVING MODE, COMPUTER PROGRAM PRODUCT AND SYSTEM
PROCÉDÉ D'ACTIONNEMENT D'UN VÉHICULE AU MOINS PARTIELLEMENT AUTOMATISÉ DANS UN MODE DE CONDUITE MANUELLE, PRODUIT-PROGRAMME INFORMATIQUE ET SYSTÈME

(30) Priorität: 05.01.2022 DE 102022200062
(43) Veröffentlichungstag der Anmeldung: 13.11.2024
(73) Patentinhaber: VOLKSWAGEN AKTIENGESELLSCHAFT, 38440 Wolfsburg (DE)
(72) Erfinder: DOBBERPHUL, Timo, 38102 Braunschweig (DE)
(86) Internationale Anmeldenummer: PCT/EP2022/085944
(87) Internationale Veröffentlichungsnummer: WO 2023/131490

(56) Entgegenhaltungen:
- DE-A1- 102012 202 294
- DE-A1- 102018 127 270
- DE-A1- 102020 211 828
- US-A1- 2020 139 991
- US-A1- 2021 132 604

## Beschreibung

Die Erfindung betrifft ein Verfahren zum Betrieb eines Fahrzeuges mit zumindest einer Funktionseinheit zum Ausführen einer Fahrfunktion des Fahrzeuges, ein Computerprogrammprodukt, sowie ein System.

Aus dem Stand der Technik sind autonom fahrende Fahrzeuge bekannt. Da beispielsweise autonome Fahrzeuge nach SAE Level 4 oder 5 für den normalen Betrieb keinen Fahrerarbeitsplatz benötigen, sind sie i.d.R. ohne herkömmliche, manuelle Steuermöglichkeiten ausgestattet. D.h., die autonomen Fahrzeuge nach SAE Level 4 oder 5 haben z. B. kein Lenkrad, kein Bremspedal und/oder kein Fahrpedal. In bestimmten Situationen kann es dennoch vorteilhaft sein, derartige autonome Fahrzeuge manuell steuern zu können. Dieses ist notwendig, um diese Fahrzeuge im Falle eines Ausfalls der automatischen Steuereinheit und/oder in einer unbekannten Umgebung bewegen zu können. Auch für die Instandhaltung und Produktion dieser Fahrzeuge gibt es Anwendungsfälle für eine manuelle Steuerung, weil die automatische Steuerung nicht verfügbar ist oder nicht für diese Spezialfälle ausgelegt ist.

Aus der US 11,099,561 B1 ist es bekannt, bei einem autonom fahrenden Fahrzeug einen manuellen Fahrmodus vorzusehen, bei welchem das Fahrzeug durch ein externes Gerät manuell gesteuert werden kann, wenn das Fahrzeug eine nicht-kartographierte Region durchfährt. Dabei ist jedoch die Sicherheitsarchitektur für die Kommunikation mit dem externen Gerät verbesserbar.

Weiterhin sind Verfahren zum Betreiben von Fahrzeugen mit unterschiedlichen Fahrmodi aus den Dokumenten DE 10 2020 211 828 A1 und US 2020/139991 A1 bekannt.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Sicherheit beim Betrieb eines zumindest teilweise automatisierten Fahrzeuges bei einem manuellen Fahrmodus zu verbessern.

Die voranstehende Aufgabe wird gelöst durch ein Verfahren mit den Merkmalen des Anspruchs 1, ein Computerprogrammprodukt mit den Merkmalen des Anspruchs 8, sowie ein System mit den Merkmalen des Anspruchs 9. Weitere vorteilhafte Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder dem erfindungsgemäßen System und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Betrieb eines Fahrzeuges gemäß Anspruch 1 vorgesehen.

Bei der Fahrfunktion handelt es sich insbesondere um eine für den Betrieb des Fahrzeuges wesentliche Funktion. Vorzugsweise umfasst die Fahrfunktion eine Beeinflussung der Beschleunigung des Fahrzeuges und/oder des Fahrweges des Fahrzeuges. Beispielsweise kann die Fahrfunktion eine Lenkung, eine Beschleunigung und/oder eine Bremsung des Fahrzeuges umfassen. Unter dem automatisierten Ausführen der Fahrfunktion handelt es sich insbesondere um einen autonomen Betrieb der Funktionseinheit mit der Fahrfunktion durch die Steuereinheit. Weiterhin ist denkbar, dass das Fahrzeug mehrere Funktionseinheiten für Fahrfunktionen, die durch die Steuereinheit automatisiert ausführbar sind, umfasst. Vorzugsweise handelt es sich bei dem Fahrzeug um ein autonom betreibbares Fahrzeug, insbesondere nach SAE Level 4 oder 5.

Bei der Steuereinheit kann es sich z. B. um eine zentrale Recheneinheit des Fahrzeuges handeln, die zum automatisierten, d.h. insbesondere autonomen, Ausführen der Fahrfunktion, vorzugsweise zum autonomen Betreiben des Fahrzeuges, ausgebildet ist. Die Steuereinheit kann zum Ausführen der Fahrfunktion beispielsweise einen Prozessor und/oder Mikroprozessor aufweisen.

Es ist denkbar, dass die Fahrfunktion und/oder das Fahrzeug bei dem Verfahren vor dem Durchführen des Initialisierungsvorgangs in dem automatisierten Fahrmodus betrieben wird. Der Initialisierungsvorgang kann beispielsweise ein Umschalten von dem automatisierten Fahrmodus auf den manuellen Fahrmodus umfassen. Beispielsweise kann der automatisierte Fahrmodus beim Durchführen des Initialisierungsvorgangs beendet werden. Der Initialisierungsvorgang kann durch ein fahrzeuginternes Signal und/oder in Abhängigkeit von einer Fahrsituation des Fahrzeuges gestartet werden. So ist es denkbar, dass erkannt wird, dass sich das Fahrzeug in einer Fahrsituation befindet, in welcher der automatisierte Fahrmodus eine eingeschränkte Funktionalität umfasst. Zusätzlich oder alternativ kann der Initialisierungsvorgang durch ein fahrzeugexternes Signal, beispielsweise von der Bedienvorrichtung gestartet werden. Dadurch kann beispielsweise ein Benutzer den manuellen Fahrmodus bewusst aktivieren. Weiterhin ist es denkbar, dass der Initialisierungsvorgang einen Erhalt erster Bedieninformationen von der Bedienvorrichtung umfasst.

Beim Aktivieren des manuellen Fahrmodus kann der automatisierte Fahrmodus beendet und/oder ein Verarbeiten der externen Bedieninformationen ermöglicht werden. Unter der externen Ansteuerung der Fahrfunktion kann insbesondere verstanden werden, dass die externen Bedieninformationen außerhalb der Steuereinheit, insbesondere durch die Bedienvorrichtung, generiert und an die Steuereinheit übertragen werden. Die Bedienvorrichtung kann vorzugsweise eine mobile Bedienvorrichtung sein. Beispielsweise kann es sich bei der Bedienvorrichtung um ein mobiles Endgerät eines Benutzers und/oder eine Steuervorrichtung, wie z. B. einen Joystick, handeln. Es ist jedoch ebenso denkbar, dass die Bedienvorrichtung dauerhaft mit der Steuereinheit verbunden ist.

Der Erhalt der externen Bedieninformationen kann drahtlos und/oder kabelgebunden erfolgen. So ist es denkbar, dass die Bedienvorrichtung zum Übertragen der Bedieninformationen mit der Steuereinheit, beispielsweise über einen elektrischen Anschluss, verbunden wird. Weiterhin kann das Senden der internen Steuerungsinformationen von der Steuereinheit an die Funktionseinheit drahtlos und/oder kabelgebunden erfolgen. Insbesondere kann die Steuereinheit mit der Funktionseinheit und/oder weiteren Funktionseinheiten ein X-by-Wire-System, insbesondere ein Drive-by-Wire-System, bilden.

Somit können die ersten und zweiten Bediendaten getrennt voneinander erhalten und/oder verarbeitet werden. Die ersten und zweiten Bediendaten können identisch sein, so dass die externen Bedieninformationen redundant durch die erste und zweite

Kommunikationsschnittstelle erhalten werden, oder die ersten und zweiten Bediendaten können sich unterscheiden. Vorzugsweise sind das erste Modul und das zweite Modul, insbesondere für eine Plausibilisierung der externen Bedieninformationen, miteinander verbunden.

Die internen Steuerungsinformationen können anhand der externen Bedieninformationen durch die Steuereinheit generiert werden. Beispielsweise können die externen Bedieninformationen verarbeitet oder, beispielsweise nach einer Plausibilisierung, als interne Steuerungsinformationen unmittelbar an die Funktionseinheit weitergeleitet werden. Es ist denkbar, dass Randbedingungen für den manuellen Fahrmodus, wie z. B. eine maximale Geschwindigkeit des Fahrzeuges oder ein maximaler Lenkeinschlag des Fahrzeuges, festgelegt werden oder sind. Dabei können die Steuerungsinformationen in Abhängigkeit von den Randbedingungen erzeugt werden.

Somit ist es im Rahmen der vorliegenden Erfindung erkannt worden, dass insbesondere eine bestehende Architektur eines zumindest teilweise automatisierten Fahrzeuges genutzt werden kann, um zumindest eine Fahrfunktion sowohl im automatisierten, als auch im manuellen Fahrmodus zu betreiben. Durch den Erhalt der externen Bediendaten durch die Steuereinheit wird somit eine pragmatische manuelle Steuermöglichkeit geschaffen, um die Fahrfunktion in relevanten Situationen manuell auszuführen. Gleichzeitig wird durch die Verwendung derselben Steuereinheit, die die Fahrfunktion auch im automatisierten Fahrmodus ansteuert, im normalen Betrieb des Fahrzeuges kein unnötiger Platz in Anspruch genommen. Durch den insbesondere getrennten Erhalt der ersten und zweiten Bediendaten durch das erste und zweite Modul wird ferner eine hohe Sicherheit beim Betrieb des Fahrzeuges ermöglicht. Durch die Aufteilung der Bedieninformationen in die ersten und zweiten Bilddaten kann beispielsweise eine Möglichkeit zur Manipulation oder zum unberechtigten Eingriff in den Fahrbetrieb in einfacher Art und Weise eingeschränkt sein. Ferner können Datenverluste und/oder ein zumindest temporärer Verbindungsabbruch beim Übertragen der Bedieninformationen frühzeitig erkannt werden.

Es ist ferner bei dem erfindungsgemäßen Verfahren vorgesehen, dass das Senden der internen Steuerungsinformationen in Abhängigkeit von einer Plausibilisierung der externen Bedieninformationen anhand der ersten Bediendaten und der zweiten Bediendaten erfolgt. Beim Senden der internen Steuerungsinformationen kann insbesondere überprüft werden, ob die ersten und zweiten Bediendaten erhalten werden. Die Bedieninformationen werden bei der Plausibilisierung erfindungsgemäß nur dann als plausibel klassifiziert, wenn die ersten und zweiten Bediendaten, insbesondere vollständig, erhalten werden. Wenn die Bedieninformationen redundant erhalten wird, können die ersten und zweiten Bediendaten zur Plausibilisierung verglichen werden. Dadurch kann beispielsweise festgestellt werden, ob die ersten und zweiten Bediendaten vollständig übertragen wurden. Ferner ist es denkbar, dass die ersten Bediendaten Informationen zur Ansteuerung der Fahrfunktion umfassen und die zweiten Bediendaten als ein Sicherheitssignal erhalten werden. Das Sicherheitssignal kann beispielsweise ein kontinuierliches und/oder ein sich regelmäßig wiederholendes Signal sein, so dass das Senden der internen Steuerungsinformationen unterbrochen werden kann, wenn das Sicherheitssignal abreißt. Durch die Plausibilisierung kann somit die Sicherheit des manuellen Fahrmodus verbessert sein.

Vorzugsweise ist vorgesehen, dass das erste Modul eine erste Kommunikationsschnittstelle zum Erhalt der ersten Bediendaten über einen ersten Kommunikationskanal und das zweite Modul eine zweite Kommunikationsschnittstelle zum Erhalt der zweiten Bediendaten über einen zweiten Kommunikationskanal umfasst. Durch die beiden Kommunikationskanäle kann die Trennung der ersten und zweiten Bediendaten physikalisch erfolgen, wodurch eine Sicherheit beim manuellen Fahrmodus verbessert sein kann. Ferner kann durch die erste und zweite Kommunikationsschnittstelle eine Kommunikation der Steuereinheit mit der Bedienvorrichtung über unterschiedliche Kommunikationsstandards ermöglicht sein. Beispielsweise können die ersten und/oder zweiten Bediendaten über Bluetooth, WLAN, ein BUS-System, wie einen CAN-Bus, und/oder eine Ethernet-Verbindung erhalten werden.

Vorzugsweise kann bei einem erfindungsgemäßen Verfahren vorgesehen sein, dass durch die Steuereinheit beim Senden der internen Steuerungsinformationen erste Steuerungsdaten über einen ersten Steuerungskanal und zweite Steuerungsdaten über einen zweiten Steuerungskanal gesendet werden, insbesondere so dass die internen Steuerungsinformationen redundant über den ersten Steuerungskanal und den zweiten Steuerungskanal übertragen werden. Vorzugsweise umfasst das erste Modul eine erste Sendeschnittstelle zum Senden der ersten Steuerungsdaten an die Funktionseinheit und das zweite Modul eine zweite Sendeschnittstelle zum Senden der zweiten Steuerungsdaten an die Funktionseinheit. Die Funktionseinheit kann ein erstes Empfangsmodul zum Empfang der ersten Steuerungsdaten und ein zweites Empfangsmodul zum Empfang der zweiten Steuerungsdaten aufweisen. Somit können die internen Steuerungsinformationen in sicherer Art und Weise übertragen werden, um Fehlfunktionen aufgrund einer fehlerhaften Übertragung der Steuerungsinformationen zu vermeiden. Dabei kann vorzugsweise auf ein bestehendes X-by-Wire-System zugegriffen werden, um die internen Steuerungsinformationen für den manuellen Fahrmodus zu senden.

Vorzugsweise kann bei einem erfindungsgemäßen Verfahren vorgesehen sein, dass der Initialisierungsvorgang einen Authentifizierungsvorgang zur Authentifizierung eines Benutzers umfasst, insbesondere wobei beim Authentifizierungsvorgang erste Authentifizierungsdaten durch das erste Modul und zweite Authentifizierungsdaten durch das zweite Modul empfangen werden und der manuelle Fahrmodus in Abhängigkeit von den ersten Authentifizierungsdaten und den zweiten Authentifizierungsdaten aktiviert wird. Bei dem Authentifizierungsvorgang kann eine Zugriffsberechtigung des Benutzers auf den manuellen Fahrmodus überprüft werden. Beispielsweise kann eine eindeutige ID der Bedienvorrichtung durch die Steuereinheit überprüft werden. Es ist jedoch ebenso denkbar, dass beim Authentifizierungsvorgang ein anderes Authentifikationsverfahren, wie z. B. über ein Passwort oder eine PlN, durchgeführt wird. Die ersten und zweiten Authentifizierungsdaten können redundant übertragen werden. Alternativ können sich die ersten und zweiten Authentifizierungsdaten unterscheiden. Beispielsweise kann die Authentifizierung für die ersten und zweiten Authentifizierungsdaten separat erfolgen, so dass die Authentifizierung des Benutzers nur bei einer erfolgreichen Authentifizierung durch die ersten und zweiten Authentifizierungsdaten erfolgt. Es kann ferner vorgesehen sein, dass ein Vergleich der ersten und zweiten Authentifizierungsdaten durchgeführt wird, um die Berechtigung des Benutzers zu überprüfen. Somit kann die Sicherheit des manuellen Fahrmodus dadurch verbessert sein, dass ein unbefugter Zugang zum manuellen Fahrmodus verhindert wird.

Vorzugsweise kann bei einem erfindungsgemäßen Verfahren vorgesehen sein, dass beim Initialisierungsvorgang Positionsdaten zur Lokalisierung des Benutzers erfasst werden, wobei der manuelle Fahrmodus in Abhängigkeit von den Positionsdaten aktiviert wird. Die Positionsdaten können geografische Positionsdaten, wie z. B. GPS-Daten, sein. Ferner ist es denkbar, dass die Positionsdaten relative Positionsdaten der Bedienvorrichtung zum Fahrzeug und/oder zur Steuereinheit sind. Beispielsweise kann beim Initialisierungsvorgang überprüft werden, ob sich die Bedienvorrichtung in einem Fahrzeuginnenraum und/oder innerhalb eines vorbestimmten Abstandes zum Fahrzeug befindet. Ferner ist es denkbar, dass in Abhängigkeit von der Lokalisierung Randbedingungen für den manuellen Fahrmodus festgelegt werden. Durch die Lokalisierung kann sichergestellt werden, dass der Benutzer sich mit der Bedienvorrichtung in einer Position befindet, in welcher er die Fahrsituation überblicken kann. Weiterhin kann ein unberechtigter Fernzugriff dadurch verhindert werden.

Weiterhin ist es bei einem erfindungsgemäßen Verfahren denkbar, dass das Verfahren, insbesondere in Form von Verfahrensschritten, umfasst:
- Erkennen einer Sondersituation, insbesondere durch die Steuereinheit und/oder in Abhängigkeit von Sensordaten einer Sensorik des Fahrzeuges und/oder in Abhängigkeit von den ersten und zweiten Bediendaten,
- Generieren von automatisierten Bedieninformationen zum, insbesondere direkten und/oder indirekten, Ansteuern der Fahrfunktion durch die Steuereinheit in Abhängigkeit von dem Erkennen der Sondersituation,
- Senden von internen Steuerungsinformationen zum, insbesondere direkten, Ansteuern der Fahrfunktion an die Funktionseinheit in Abhängigkeit von den automatisierten Bedieninformationen durch die Steuereinheit.

Bei der Sondersituation kann es sich insbesondere um eine Notsituation handeln. Die automatisierten Bedieninformationen können unabhängig von den externen Bedieninformationen sein oder die externen Bedieninformationen können beim Generieren der externen Bedieninformationen modifiziert werden. Somit kann die Fahrfunktion in einem hybriden Fahrmodus angesteuert werden, in welchem die Steuereinheit durch die automatisierten Steuerungsinformationen zumindest teilweise in den Fahrbetrieb des Fahrzeuges eingreifen kann. Beispielsweise kann vorgesehen sein, dass das Verfahren ein Erfassen von Sensordaten einer Sensorik des Fahrzeuges umfasst. Dabei können die automatisierten Bedieninformationen vorteilhafterweise in Abhängigkeit von den Sensordaten generiert werden. Es ist jedoch ebenso denkbar, dass die Sondersituation in Abhängigkeit von einer Benutzereingabe erkannt wird, insbesondere mit welcher der Benutzer die Steuereinheit über die Sondersituation informiert.

Im Rahmen der Erfindung ist es weiterhin denkbar, dass die automatisierten Bedieninformationen zum Ausführen eines Nothaltevorgangs zum Abbremsen des Fahrzeuges generiert werden und/oder die automatisierten Bedieninformationen gegenüber den externen Bedieninformationen in Abhängigkeit von dem Erkennen der Sondersituation priorisiert werden. Insbesondere in einer Notsituation kann durch den Nothaltevorgang sichergestellt werden, dass das Fahrzeug in einen Stillstand, d.h. insbesondere einen sicheren Zustand, überführt wird. Beispielsweise kann der Nothaltevorgang ausgelöst werden, wenn die ersten und zweiten Bediendaten der externen Bedieninformationen einer Plausibilisierung widersprechen. Durch die Priorisierung der automatisierten Bedieninformationen kann beispielsweise eine Kollision mit einem Hindernis, welches über die Sensorik von der Steuereinheit erkannt wurde, verhindert werden. Somit kann die Sensorik im manuellen und/oder hybriden Fahrmodus permanent aktiv sein. Es ist jedoch ebenso denkbar, dass, insbesondere im manuellen und/oder hybriden Fahrmodus, die externen Bedieninformationen gegenüber den automatisierten Bedieninformationen priorisiert werden, um die Benutzerkontrolle über das Fahrzeug zu verstärken.

Gemäß einem weiteren Aspekt der Erfindung ist ein Computerprogrammprodukt vorgesehen. Das Computerprogrammprodukt umfasst Befehle, die bei einer Ausführung durch eine Steuereinheit die Steuereinheit veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Gemäß einem weiteren Aspekt der Erfindung ist ein System vorgesehen. Das System umfasst eine Funktionseinheit für ein Fahrzeug zum Ausführen einer Fahrfunktion des Fahrzeuges und eine Bedienvorrichtung für einen manuellen Fahrmodus zum externen Ansteuern der Fahrfunktion. Ferner umfasst das System eine Steuereinheit für das Fahrzeug, durch welche die Funktionseinheit zum automatisierten Ausführen der Fahrfunktion in einem automatisierten Fahrmodus ansteuerbar ist. Weiterhin ist die Steuereinheit zum Ausführen eines erfindungsgemäßen Verfahrens ausgebildet.

Somit bringt ein erfindungsgemäßes System die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Es kann vorgesehen sein, dass das Fahrzeug Teil des Systems ist. Die Bedienvorrichtung kann als eine externe Bedienvorrichtung, insbesondere außerhalb des Fahrzeugs, oder als eine interne Bedienvorrichtung zur dauerhaften Anordnung innerhalb des Fahrzeugs ausgebildet sein. Weiterhin kann die Bedienvorrichtung beispielsweise eine lösbare Steckerverbindung zur Verbindung mit dem Fahrzeug aufweisen. Die Funktionseinheit kann z. B. eine Bremsvorrichtung, eine Lenkvorrichtung und/oder eine Antriebsvorrichtung umfassen. Vorzugsweise umfasst das System mehrere Funktionseinheiten, die durch die Steuereinheit im manuellen und/oder automatisierten Fahrmodus ansteuerbar sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figuren 1+2: ein erfindungsgemäßes System mit einer Steuereinheit zum Ausführen eines erfindungsgemäßen Verfahrens in einem ersten Ausführungsbeispiel, und
- Figur 3: das Verfahren in schematischer Darstellung von Verfahrensschritten.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

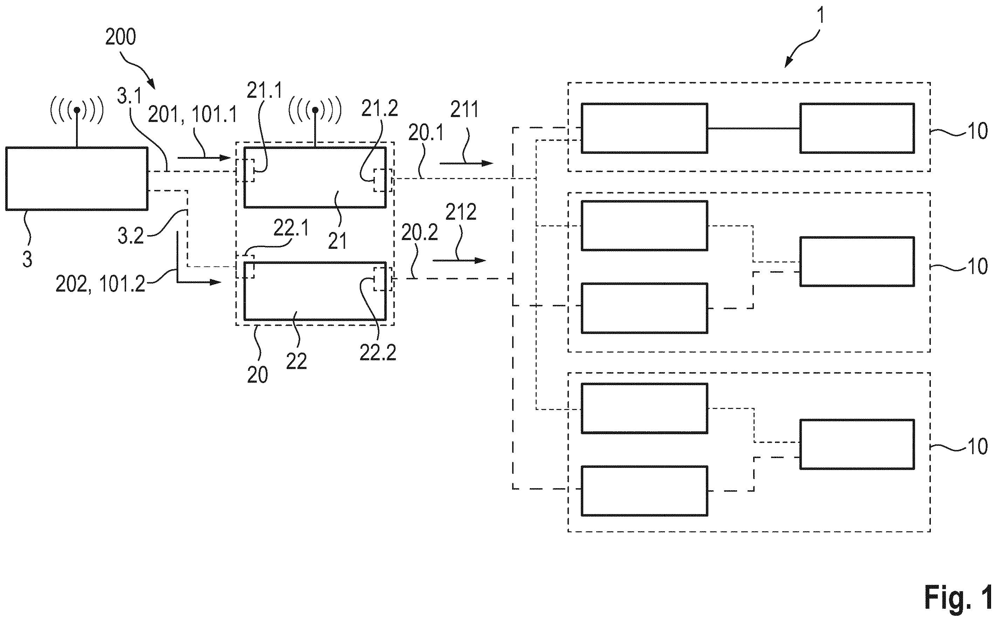

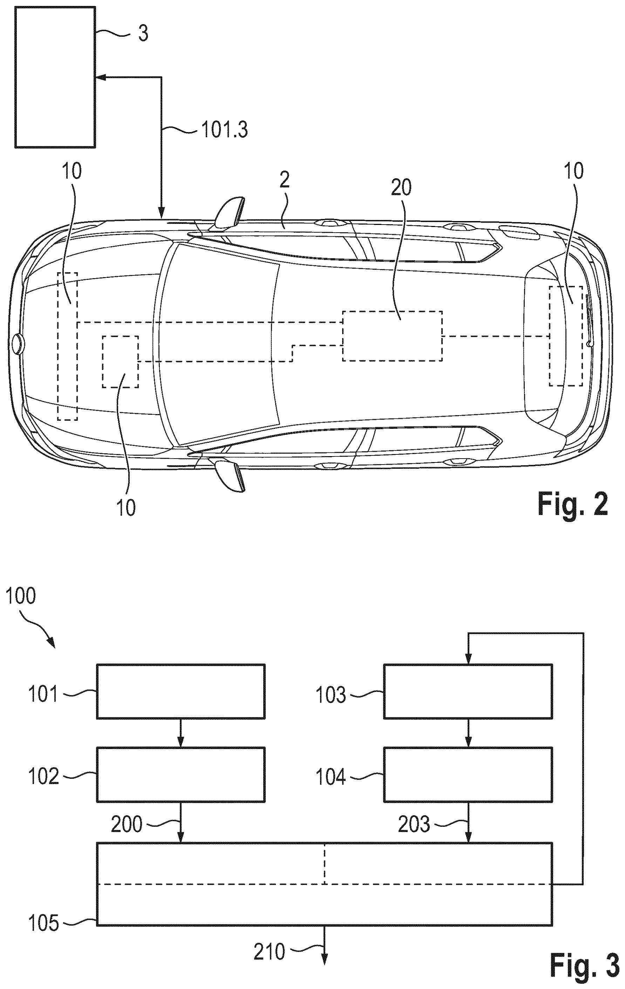

Figur 1 zeigt ein erfindungsgemäßes System 1 mit zumindest einer Funktionseinheit 10 für ein Fahrzeug 2 zum Ausführen einer Fahrfunktion des Fahrzeuges 2. Ferner umfasst das System 1 eine Steuereinheit 20 für das Fahrzeug 2, durch welche die Funktionseinheit 10 zum automatisierten Ausführen der Fahrfunktion in einem automatisierten Fahrmodus ansteuerbar ist. Das Fahrzeug 2, bei dem es sich vorzugsweise um ein vollständig autonom betreibbares Fahrzeug 2 handeln kann, ist in Figur 2 dargestellt. Vorzugsweise umfasst das Fahrzeug 2 dabei mehrere Funktionseinheiten 10, wie beispielsweise einen Antrieb, eine Bremsvorrichtung und/oder eine Lenkvorrichtung, zum Ausführen unterschiedlicher Fahrfunktionen.

Weiterhin umfasst das System 1 eine Bedienvorrichtung 3 für einen manuellen Fahrmodus zum externen Ansteuern zumindest einer der Fahrfunktionen. Die Bedienvorrichtung 3 kann vorzugsweise ein mobiles Gerät, wie z. B. ein mobiles Endgerät des Benutzers, umfassen. Die Steuereinheit 20 ist ferner zum Ausführen eines erfindungsgemäßen Verfahrens 100 zum Betrieb des Fahrzeuges 2 ausgebildet. Dazu kann ein Computerprogrammprodukt vorgesehen sein, welches Befehle umfasst, die bei einer Ausführung durch die Steuereinheit 20 die Steuereinheit 20 veranlassen, das Verfahren 100 auszuführen. Nachfolgend wird auf eine der Fahrfunktionen Bezug genommen. Es ist jedoch ebenso denkbar, dass alle Fahrfunktionen des Fahrzeuges 2 durch die Steuereinheit 20 in dem automatisierten und dem manuellen Fahrmodus betreibbar sind und/oder betrieben werden.

Ein Ablauf des Verfahrens 100 ist schematisch in Figur 3 dargestellt. Dabei erfolgt zunächst ein Durchführen eines Initialisierungsvorgangs 101 zur Aktivierung des manuellen Fahrmodus zum externen Ansteuern der Fahrfunktion über die Bedienvorrichtung 3. Beim Initialisierungsvorgang 101 kann die Ansteuerung der Fahrfunktion im manuellen Fahrmodus durch die Steuereinheit 20 freigeschaltet werden. Der Initialisierungsvorgang 101 umfasst vorzugsweise einen Authentifizierungsvorgang zur Authentifizierung eines Benutzers. Weiterhin können beim Initialisierungsvorgang 101 Positionsdaten 101.3 zur Lokalisierung des Benutzers erfasst werden, um den manuellen Fahrmodus in Abhängigkeit von den Positionsdaten 101.3 zu aktivieren.

Im manuellen Fahrmodus erfolgt ein Erhalt 102 von externen Bedieninformationen 200 zum Ansteuern der Fahrfunktion von der Bedienvorrichtung 3 durch die Steuereinheit 20. Die externen Bedieninformationen 200 umfassen dabei erste Bediendaten 201, die durch ein erstes Modul 21 der Steuereinheit 20 erhalten werden, und zweite Bediendaten 202, die durch ein zweites Modul 22 der Steuereinheit 20 erhalten werden. Dazu kann das erste Modul 21 vorteilhafterweise eine erste Kommunikationsschnittstelle 21.1 zum Erhalt 102 der ersten Bediendaten 201 über einen ersten Kommunikationskanal 3.1 aufweisen. Das zweite Modul 22 kann eine zweite Kommunikationsschnittstelle 22.1 zum Erhalt 102 der zweiten Bediendaten 202 über einen zweiten Kommunikationskanal 3.2 aufweisen. Die ersten und zweiten Bediendaten 201, 202 können die gleichen Informationen umfassen, also redundant übertragen werden. Es ist jedoch ebenso denkbar, dass die ersten und zweiten Bediendaten 201, 202 sich unterscheiden, um beispielsweise die ersten Bediendaten 201 anhand der zweiten Bediendaten 202 zu plausibilisieren oder umgekehrt. Vorzugsweise können für den Authentifizierungsvorgang ferner erste Authentifizierungsdaten 101.1 durch das erste Modul 21 und zweite Authentifizierungsdaten 101.2 durch das zweite Modul 22 empfangen werden, um den manuellen Fahrmodus in Abhängigkeit von den ersten Authentifizierungsdaten 101.1 und den zweiten Authentifizierungsdaten 101.2 zu aktivieren.

In Abhängigkeit von den externen Bedieninformationen 200 erfolgt ferner ein Senden 105 von internen Steuerungsinformationen 210 zum Ansteuern der Fahrfunktion durch die Steuereinheit 20 an die Funktionseinheit 10. Die internen Steuerungsinformationen 210 können durch die Steuereinheit 20 anhand der externen Bedieninformationen 200 generiert werden. Beispielsweise können die externen Bedieninformationen 200 weitergeleitet, interpretiert und/oder modifiziert werden, um die internen Steuerungsinformationen 210 zu erzeugen. Das Senden 105 der internen Steuerungsinformationen 210 wird erfindungsgemäß in Abhängigkeit von einer Plausibilisierung der externen Bedieninformationen 200 anhand der ersten Bediendaten 201 und der zweiten Bediendaten 202 durchgeführt. Um auch fahrzeugintern eine Redundanz und/oder gegenseitige Absicherung über einen ersten Steuerungskanal 20.1 und einen zweiten Steuerungskanal 20.2 zu erreichen, können beim Senden 105 der internen Steuerungsinformationen 210 erste Steuerungsdaten 211 der internen Steuerungsinformationen 210 über den ersten Steuerungskanal 20.1 und zweite Steuerungsdaten 212 der internen Steuerungsinformationen 210 über den zweiten Steuerungskanal 20.2 an die Funktionseinheit 10 gesendet werden. Vorzugsweise umfasst das erste Modul 21 eine erste Sendeschnittstelle 21.2 zum Senden der ersten Steuerungsdaten 211 an die Funktionseinheit 3 und das zweite Modul 22 eine zweite Sendeschnittstelle 22.2 zum Senden 105 der zweiten Steuerungsdaten 212 an die Funktionseinheit 10.

Weiterhin kann das Verfahren 100 ein Erkennen 103 einer Sondersituation und ein Generieren 104 von automatisierten Bedieninformationen 203 zum Ansteuern der Fahrfunktion durch die Steuereinheit 20 in Abhängigkeit von dem Erkennen 103 der Sondersituation umfassen. Das Erkennen 103 der Sondersituation kann insbesondere parallel zu und/oder nach dem Empfangen der externen Bedieninformationen 200 erfolgen. Die Sondersituation kann beispielsweise erfasst werden, wenn die ersten Bediendaten 201 und zweiten Bediendaten 202 nicht plausibel sind, also ein Übertragungsfehler vorliegt. Es ist jedoch ebenso denkbar, dass die Sondersituation durch eine Sensorik des Fahrzeuges 2 erkannt wird. Insbesondere kann das Erkennen 103 der Sondersituation rekursiv während des manuellen Fahrmodus und/oder in Abhängigkeit von einer Benutzereingabe durchgeführt werden. Die automatisierten Bedieninformationen 203 können z. B. zum Ausführen eines Nothaltevorgangs zum Abbremsen des Fahrzeuges 2 generiert werden, insbesondere wenn die Sondersituation als Notsituation erkannt wird. Dabei können die automatisierten Bedieninformationen 203 gegenüber den externen Bedieninformationen 200 in Abhängigkeit von dem Erkennen 103 der Sondersituation priorisiert werden. In Abhängigkeit von den automatisierten Bedieninformationen 203 durch die Steuereinheit 20 erfolgt daraufhin ein Senden 105 von internen Steuerungsinformationen 210 zum Ansteuern der Fahrfunktion an die Funktionseinheit 10.

Somit ist es durch das Verfahren 100 und/oder das System 1 möglich, eine bestehende Architektur eines zumindest teilweise automatisierten Fahrzeuges 2 zu nutzen, um zumindest eine Fahrfunktion sowohl im automatisierten, als auch im manuellen Fahrmodus zu betreiben. Durch die Separierung der ersten Bediendaten 201 und der zweiten Bediendaten 202 können Datenverluste bei der manuellen Ansteuerung frühzeitig erkannt werden.

### Bezugszeichenliste

- 1: System
- 2: Fahrzeug
- 3: Bedienvorrichtung
- 3.1: erster Kommunikationskanal
- 3.2: zweiter Kommunikationskanal

- 10: Funktionseinheit
- 20: Steuereinheit
- 20.1: erster Steuerungskanal
- 20.2: zweiter Steuerungskanal
- 21: erstes Modul
- 21.1: erste Kommunikationsschnittstelle
- 21.2: erste Sendeschnittstelle
- 22: zweites Modul
- 22.1: zweite Kommunikationsschnittstelle
- 22.2: zweite Sendeschnittstelle

- 100: Verfahren
- 101: Initialisierungsvorgang
- 101.1: erste Authentifizierungsdaten
- 101.2: zweite Authentifizierungsdaten
- 101.3: Positionsdaten
- 102: Erhalt
- 103: Erkennen
- 104: Generieren
- 105: Senden

- 200: externe Bedieninformationen
- 201: erste Bediendaten
- 202: zweite Bediendaten
- 203: automatisierte Bedieninformationen

- 210: Steuerungsinformationen
- 211: erste Steuerungsdaten
- 212: zweite Steuerungsdaten

## Patentansprüche

1. Verfahren (100) zum Betrieb eines Fahrzeuges (2) mit zumindest einer Funktionseinheit (10) zum Ausführen einer Fahrfunktion des Fahrzeuges (2), wobei die Funktionseinheit (10) durch eine Steuereinheit (20) des Fahrzeuges (2) zum automatisierten Ausführen der Fahrfunktion in einem automatisierten Fahrmodus ansteuerbar ist,
wobei das Verfahren (100) umfasst:
- Durchführen eines Initialisierungsvorgangs (101) zur Aktivierung eines manuellen Fahrmodus zum externen Ansteuern der Fahrfunktion über eine Bedienvorrichtung (3),
- Erhalt (102) von externen Bedieninformationen (200) zum Ansteuern der Fahrfunktion im manuellen Fahrmodus von der Bedienvorrichtung (3) durch die Steuereinheit (20), wobei die Bedieninformationen (200) erste Bediendaten (201), die durch ein erstes Modul (21) der Steuereinheit (20) erhalten werden, und zweite Bediendaten (202), die durch ein zweites Modul (22) der Steuereinheit (20) erhalten werden, umfassen,
- Senden (105) von internen Steuerungsinformationen (210) zum Ansteuern der Fahrfunktion an die Funktionseinheit (10) in Abhängigkeit von den externen Bedieninformationen (200) durch die Steuereinheit (20),
**dadurch gekennzeichnet, dass** das Senden (105) der internen Steuerungsinformationen (210) in Abhängigkeit von einer Plausibilisierung der externen Bedieninformationen (200) anhand der ersten Bediendaten (201) und der zweiten Bediendaten (202) erfolgt,
wobei die Bedieninformationen (200) bei der Plausibilisierung nur dann als plausibel klassifiziert werden, wenn die ersten und zweiten Bediendaten (201, 202) erhalten werden.

2. Verfahren (100) nach einem der vorhergehenden Ansprüche,
**dadurch gekennzeichnet,**
**dass** das erste Modul (21) eine erste Kommunikationsschnittstelle (21.1) zum Erhalt der ersten Bediendaten (201) über einen ersten Kommunikationskanal (3.1) und das zweite Modul (22) eine zweite Kommunikationsschnittstelle (22.1) zum Erhalt der zweiten Bediendaten (202) über einen zweiten Kommunikationskanal (3.2) umfasst.

3. Verfahren (100) nach einem der vorhergehenden Ansprüche,
**dadurch gekennzeichnet,**
**dass** durch die Steuereinheit beim Senden (105) der internen Steuerungsinformationen (210) erste Steuerungsdaten (211) über einen ersten Steuerungskanal (20.1) und zweite Steuerungsdaten (212) über3 einen zweiten Steuerungskanal (20.2) gesendet werden, so dass die internen Steuerungsinformationen (210) redundant über den ersten Steuerungskanal (20.1) und den zweiten Steuerungskanal (20.2) übertragen werden.

4. Verfahren (100) nach einem der vorhergehenden Ansprüche,
**dadurch gekennzeichnet,**
**dass** der Initialisierungsvorgang (101) einen Authentifizierungsvorgang zur Authentifizierung eines Benutzers umfasst, wobei beim Authentifizierungsvorgang erste Authentifizierungsdaten (101.1) durch das erste Modul (21) und zweite Authentifizierungsdaten (101.2) durch das zweite Modul (22) empfangen werden und der manuelle Fahrmodus in Abhängigkeit von den ersten Authentifizierungsdaten (101.1) und den zweiten Authentifizierungsdaten (101.2) aktiviert wird.

5. Verfahren nach einem der vorhergehenden Ansprüche,
**dadurch gekennzeichnet,**
**dass** beim Initialisierungsvorgang (101) Positionsdaten (101.3) zur Lokalisierung des Benutzers erfasst werden, wobei der manuelle Fahrmodus in Abhängigkeit von den Positionsdaten (101.3) aktiviert wird.

6. Verfahren (100) nach einem der vorhergehenden Ansprüche,
**dadurch gekennzeichnet,**
**dass** das Verfahren (100) umfasst:
- Erkennen (103) einer Sondersituation,
- Generieren (104) von automatisierten Bedieninformationen (203) zum Ansteuern der Fahrfunktion durch die Steuereinheit (20) in Abhängigkeit von dem Erkennen (103) der Sondersituation,
- Senden (105) von internen Steuerungsinformationen (210) zum Ansteuern der Fahrfunktion an die Funktionseinheit (10) in Abhängigkeit von den automatisierten Bedieninformationen (203) durch die Steuereinheit (20).

7. Verfahren (100) nach einem der vorhergehenden Ansprüche,
**dadurch gekennzeichnet,**
**dass** die automatisierten Bedieninformationen (203) zum Ausführen eines Nothaltevorgangs zum Abbremsen des Fahrzeuges (2) generiert werden und/oder die automatisierten Bedieninformationen (203) gegenüber den externen Bedieninformationen (200) in Abhängigkeit von dem Erkennen (103) der Sondersituation priorisiert werden.

8. Computerprogrammprodukt, umfassend Befehle, die bei einer Ausführung durch eine Steuereinheit (20) die Steuereinheit (20) veranlassen, ein Verfahren (100) nach einem der vorhergehenden Ansprüche auszuführen.

9. System (1) umfassend
eine Funktionseinheit (10) für ein Fahrzeug (2) zum Ausführen einer Fahrfunktion des Fahrzeuges (2),
eine Bedienvorrichtung (3) für einen manuellen Fahrmodus zum externen Ansteuern der Fahrfunktion, und
eine Steuereinheit (20) für das Fahrzeug (2), durch welche die Funktionseinheit (10) zum automatisierten Ausführen der Fahrfunktion in einem automatisierten Fahrmodus ansteuerbar ist,
wobei die Steuereinheit (20) zum Ausführen eines Verfahrens (100) nach einem der Ansprüche 1 bis 7 ausgebildet ist.

## Claims

1. Method (100) for operating a vehicle (2) having at least one functional unit (10) for performing a driving function of the vehicle (2), it being possible to control the functional unit (10) by means of a control unit (20) of the vehicle (2) for automated performance of the driving function in an automated driving mode,
the method (100) comprising:
- carrying out an initialization process (101) to activate a manual driving mode for external control of the driving function via an operator control apparatus (3),
- receiving (102), from the operating device (3), external operating information (200) for controlling the driving function in manual driving mode by the control unit (20), the operating information (200) comprising first operating data (201) received by a first module (21) of the control unit (20) and second operating data (202) received by a second module (22) of the control unit (20),
- sending (105) internal control information (210) to the functional unit (10) to control the driving function depending on the external operating information (200) by the control unit (20),
**characterized in that**
sending (105) the internal control information (210) takes place depending on a plausibility check of the external operating information (200) based on the first operating data (201) and the second operating data (202),
the operating information (200) only being classified as plausible during the plausibility check if the first and the second operating data (201, 202) are obtained.

2. Method (100) according to any of the preceding claims,
**characterized in that**
the first module (21) comprises a first communication interface (21.1) for receiving the first operating data (201) via a first communication channel (3.1), and the second module (22) comprises a second communication interface (22.1) for receiving the second operating data (202) via a second communication channel (3.2).

3. Method (100) according to any of the preceding claims,
**characterized in that**
when the control unit sends (105) the internal control information (210), first control data (211) are sent via a first control channel (20.1) and second control data (212) are sent via a second control channel (20.2), so that the internal control information (210) is transmitted redundantly via the first control channel (20.1) and the second control channel (20.2).

4. Method (100) according to any of the preceding claims,
**characterized in that**
the initialization process (101) comprises an authentication process to authenticate a user, first authentication data (101.1) being received by the first module (21) and second authentication data (101.2) being received by the second module (22) during the authentication process, and the manual driving mode being activated depending on the first authentication data (101.1) and the second authentication data (101.2).

5. Method according to any of the preceding claims,
**characterized in that**
during the initialization process (101), position data (101.3) are acquired to locate the user, the manual driving mode being activated depending on the position data (101.3).

6. Method (100) according to any of the preceding claims,
**characterized in that**
the method (100) comprises:
- detecting (103) a special situation,
- generating (104) automated operating information (203) for controlling the driving function by the control unit (20) depending on the detection (103) of the special situation,
- sending (105) internal control information (210) to the functional unit (10) to control the driving function depending on the automated operating information (203) by the control unit (20).

7. Method (100) according to any of the preceding claims,
**characterized in that**
the automated operating information (203) for performing an emergency stop procedure to brake the vehicle (2) is generated and/or the automated operating information (203) is prioritized over the external operating information (200) depending on the detection (103) of the special situation.

8. Computer program product comprising instructions which, when executed by a control unit (20), cause the control unit (20) to perform a method (100) according to any of the preceding claims.

9. System (1) comprising
a functional unit (10) for a vehicle (2) for performing a driving function of the vehicle (2),
an operator control apparatus (3) for a manual driving mode for external control of the driving function, and
a control unit (20) for the vehicle (2) by which the functional unit (10) can be controlled for the automated performance of the driving function in an automated driving mode,
wherein the control unit (20) is designed to perform a method (100) according to any of claims 1 to 7.

## Revendications

1. Procédé (100) permettant de faire fonctionner un véhicule (2) comportant au moins une unité fonctionnelle (10) pour l'exécution d'une fonction de conduite du véhicule (2), dans lequel l'unité fonctionnelle (10) peut être commandée par une unité de commande (20) du véhicule (2) pour l'exécution automatisée de la fonction de conduite dans un mode de conduite automatisé,
dans lequel le procédé (100) comprend :
- la réalisation d'un processus d'initialisation (101) pour l'activation d'un mode de conduite manuel pour la commande externe de la fonction de conduite par l'intermédiaire d'un dispositif de manipulation (3),
- la réception (102), par l'unité de commande (20), d'informations de manipulation externes (200) provenant du dispositif de manipulation (3) et permettant de commander la fonction de conduite dans le mode de conduite manuel, dans lequel les informations de manipulation (200) comprennent des premières données de manipulation (201) obtenues par un premier module (21) de l'unité de commande (20) et des secondes données de manipulation (202) obtenues par un second module (22) de l'unité de commande (20),
- l'envoi (105), par l'unité de commande (20), d'informations de commande internes (210) permettant de commander la fonction de conduite au niveau de l'unité fonctionnelle (10) en fonction des informations de manipulation externes (200),
**caractérisé en ce que**
l'envoi (105) des informations de commande internes (210) est effectué en fonction d'un contrôle de la plausibilité des informations de manipulation externes (200) sur la base des premières données de manipulation (201) et des secondes données de manipulation (202),
dans lequel les informations de manipulation (200) ne sont classées comme plausibles lors du contrôle de la plausibilité que si les premières et secondes données de manipulation (201, 202) ont été reçues.

2. Procédé (100) selon l'une des revendications précédentes,
**caractérisé en ce**
**que** le premier module (21) comprend une première interface de communication (21.1) permettant de recevoir les premières données de manipulation (201) par l'intermédiaire d'un premier canal de communication (3.1) et le second module (22) comprend une seconde interface de communication (22.1) permettant de recevoir les secondes données de manipulation (202) par l'intermédiaire d'un second canal de communication (3.2).

3. Procédé (100) selon l'une des revendications précédentes,
**caractérisé en ce**
**que,** lors de l'envoi (105) des informations de commande internes (210), au moyen de l'unité de commande, des premières données de commande (211) sont envoyées par l'intermédiaire d'un premier canal de commande (20.1) et des secondes données de commande (212) sont envoyées par l'intermédiaire d'un second canal de commande (20.2), de sorte que les informations de commande internes (210) sont transmises de manière redondante par l'intermédiaire du premier canal de commande (20.1) et du second canal de commande (20.2).

4. Procédé (100) selon l'une des revendications précédentes,
**caractérisé en ce**
**que** le processus d'initialisation (101) comprend un processus d'authentification permettant d'authentifier un utilisateur, dans lequel, lors du processus d'authentification, des premières données d'authentification (101.1) sont reçues par le premier module (21) et des secondes données d'authentification (101.2) sont reçues par le second module (22), et le mode de conduite manuel est activé en fonction des premières données d'authentification (101.1) et des secondes données d'authentification (101.2).

5. Procédé selon l'une des revendications précédentes,
**caractérisé en ce**
**que**, lors du processus d'initialisation (101), des données de position (101.3) permettant de localiser l'utilisateur sont détectées, dans lequel le mode de conduite manuel est activé en fonction des données de position (101.3).

6. Procédé (100) selon l'une des revendications précédentes,
**caractérisé en ce**
**que** le procédé (100) comprend :
- la détection (103) d'une situation particulière,
- la génération (104) d'informations de manipulation automatisées (203) permettant de commander la fonction de conduite par l'unité de commande (20) en fonction de la détection (103) de la situation particulière,
- l'envoi (105), par l'unité de commande (20), d'informations de commande internes (210) permettant de commander la fonction de conduite au niveau de l'unité fonctionnelle (10) en fonction des informations de manipulation automatisées (203).

7. Procédé (100) selon l'une des revendications précédentes,
**caractérisé en ce**
**que** les informations de manipulation automatisées (203) sont générées pour l'exécution d'un processus d'arrêt d'urgence pour freiner le véhicule (2) et/ou les informations de manipulation automatisées (203) sont prioritaires par rapport aux informations de manipulation externes (200) en fonction de la détection (103) de la situation particulière.

8. Produit-programme d'ordinateur, comprenant des instructions qui, lorsqu'elles sont exécutées par une unité de commande (20), amènent l'unité de commande (20) à exécuter un procédé (100) selon l'une des revendications précédentes.

9. Système (1) comprenant
une unité fonctionnelle (10) pour un véhicule (2) pour l'exécution d'une fonction de conduite du véhicule (2),
un dispositif de manipulation (3) pour un mode de conduite manuel pour la commande externe de la fonction de conduite, et
une unité de commande (20) pour le véhicule (2), au moyen de laquelle l'unité fonctionnelle (10) peut être commandée pour l'exécution automatisée de la fonction de conduite dans un mode de conduite automatisé,
dans lequel l'unité de commande (20) est configurée pour l'exécution d'un procédé (100) selon l'une des revendications 1 à 7.
